# EUROPÄISCHE PATENTANMELDUNG

(11) **EP 0 865 939 A2**
(43) Veröffentlichungstag der Anmeldung: **23.09.1998**
(21) Anmeldenummer: 97110820.4
(22) Anmeldetag: 01.07.1997
(51) Int. Cl.: B60B 3/16

(54) **Radschraube und Radmutter zur Befestigung von Kraftfahrzeugrädern**

(30) Priorität: 17.03.1997 DE 29704820 U
(71) Anmelder: Aluett Leichtmetall-Räder GmbH & Co. KG., 76877 Offenbach (DE)
(72) Erfinder: Dahlhäuser, Rüdiger, 76835 Burrweiler (DE)
(74) Vertreter: Kern, Wolfgang, Dipl.-Ing.

(57) **Zusammenfassung**

Die Erfindung betrifft eine Radschraube (2) und eine Radmutter (1) zur Befestingung von Kraftfahrzeugrädern, wobei die Radschraube einen Mutternteil (8), einen Außengewindeschaftteil (4) und einen dazwischen befindlichen Konusteil (9) aufweist und die Radfelge durchgreifend in eine Gewindebohrung der Radnabe oder -scheibe einschraubbar ist, und die Radmutter ein Innengewinde sowie einen Konusteil aufweist und auf den Außengewindeschaftteil eines die Radfelge durchgreifenden Radbolzens der Radnabe oder -scheibe aufschraubbar ist.

Um eine Vereinfachung der Radbefestigungssysteme insbesondere in den Fällen in kostengünstigerer Weise zu erreichen, in denen die Lochkreisdifferenzen unterschiedlicher Räder bzw. Radflanschen nicht erheblich sind, so daß die Möglichkeit geschaffen wird, Räder mit gleichem Lochkreis an Radflanschen mit unterschiedlichen Lochkreisen zu befestigen, wird vorgeschlagen, daß der Konusteil (9) eine separate Konusscheibe (10) ist, die auf die Radschraube oder den Radbolzen bzw. die Radmutter aufsteckbar ist und eine Druchgangsbohrung aufweist, deren Durchmesser größer ist als der Außendurchmesser des Gewindeschaftteils der Radschraube oder des Radbolzen bzw. des Schaftes der Radmutter.

## Beschreibung

Die Erfindung betritt eine Radschraube sowie eine Radmutter zur Befestigung von Kraftfahrzeugrädern, wobei die Radschraube einen Mutternteil, einen Außengewindeschaftteil und einen dazwischen befindlichen Konusteil aufweist und die Radfelge durchgreifend in eine Gewindebohrung der Radnabe oder -scheibe einschraubbar ist, und die Radmutter ein Gegengewinde sowie einen Konusteil aufweist und auf den Außengewindeschaftteil eines die Radfelge durchgreifenden Radbolzens der Radnabe oder -scheibe aufschraubbar ist.

Die Fahrzeugradhersteller fertigen heutzutage weltweit eine Vielzahl von Rädern an, von denen sich der Anteil der Leichtmetallräder wegen der Gewichtseinsparung zunehmend erhöbt, die sich im Hinblick auf die Felgenabmessungen, insbesondere was deren Durchmesser und Breite anbelangt, zur Befriedigung vielfältiger Kundenwünsche und Erfüllung technischer Erfordernisse stark unterscheiden, so beispielsweise auch in ihren Lochkreisdurchmessern zur Befestigung der Räder bzw. Felgen mittels Radschrauben und/oder Radmuttern an der Radnabe oder -scheibe.

Zur Verringerung des Herstellungs- und Lagerhaltungsaufwandes sind bereits Einheitsrad-Systeme vorgeschlagen worden (EP 0 641 677, DE-A1-40 23 912, DE-U1-90 05 110), die ein enges Leichtmetallrad zur Grundlage haben, welches sich mit wenigen Zusatzelementen, Anschlußteilen sowie austauschbaren Adapterteilen mit der Radnabe verbinden und damit praktisch an jedem PKW anwenden lassen, dessen Radnabe einen Lochkreisdurchmesservon etwa 98 bis 122 mm hat.

Derartige Adapter und Anschlußteile stellen jedoch einen nicht unbeträchtlichen Kostenfaktor dar, noch zumal sie eine paßgenaue Bearbeitung erfordern

Die vorliegende Erfindung sieht ihre Aufgabe darin, eine Vereinfachtung der Radbefestigungssysteme insbesondere in den Fällen in kostengünstigerer Weise zu erreichen, in denen die Lochkreisdifferenzen unterschiedlicher Räder bzw. Radflanschen nicht erheblich sind, so daß die Möglichkeit geschaffen wird, Räder mit gleichem Lochkreis an Radflanschen mit unterschiedlichen Lochkreisen zu befestigen.

Diese Aufgabe wird erfindungsgemäß dadurch gelöst, daß der Konusteil der Radschraube und Radmutter eine separate Konusscheibe ist, die aufdie Radschraube bzw. den Radbolzen bzw. die Radmutter aufsteckbar ist und eine Durchgangsbohrung aufweist, deren Durchmesser größer ist ab der Außendurchmesser des Gewindeschafttiels der Radschraube oder des Radbolzens bzw. der Radmutter.

Somit wird eine sogenannte Multi-Use-Schraube oder -Mutter geschaffen, bei der der Konus im Gegensatz zu den herkömmlichen Radschrauben und Muttern, die mit dem Konus eine Einheit bilden oder bei denen der Konus mit einer Spielfassung geführt wird, von der Schraube bzw. Mutter vollständig getrennt angefertigt wird, so daß eine Konusscheibe entsteht, deren Innendurchmesser größer ist als die dazugehörige Radschraube oder Radmutter.

Gemaß einer vorteilhaften Ausgestaltung der Erfindung ist der Durchmesser der Bohrung der Konusscheibe 1,5 bis 2,5 mm größer ab der Außendurchmesser der zugehörigen Radscheibe oder des zugehörigen Radbolzen bzw. des Schaftes der Radmutter. Dies Spiel ermöglicht es, Räder mit gleichem Lochkreis an Radflanschen mit unterschiedlichen Lochkreisen zu befestigen.

Gemäß einer weiteren vorteilhaften Ausgestaltung der Erfindung ist der größte Außendurchmesser der Konusscheibe größer als der Außendurchmesser des Radmutternflansches, und die Radmutter weist eine schaftförmige Verlängerung auf, auf die die Konusscheibe aufsteckbar ist. Der Außendurchmesser dieser schaftförmigen Verlängerung ist dann zweckmäßigerweise 1,5 bis 2,5 mm kleiner als der Innendurchmesser der Konusscheibe.

Insgesamt also ist festzustellen, daß es die Erfindung ermöglicht, daß die Radschraube und die Radmutter für Räder mit gleichen Lochkreisen an Radflanschen bzw. Scheiben oder -naben mit unterschiedlichen Lochkreisen verwendbar Sind, da die separate Konusscheibe aufgrund ihres Spiels sich in die Schrauben- bzw. Mutternlöcher des Lochkreises der Felge hineinsetzt, wenn die Mutter oder Schraube aufgrund der Lochkreisdurchmesserdifferenz nicht zentrisch das Loch durchgreifen kann, um mit dem Gewinde im Radflansch bzw. der Radscheibe in Eingriff zu kommen.

Die Erfindung wird nachfolgend anhand der in der Zeichnung dargestellten Ausführungsbeispiele näher erläutert. In der Zeichnung zeigen:
- Fig. 1: eine Seitenansicht sowie eine zugehörige Draufsicht der erfindungsgemäßen Radschraube,
- Fig. 2: eine Seitenansicht sowie eine zugehörige Draufsicht der zu der Radschraube von Fig. 1 gehörenden separaten Konusscheibe,
- Fig. 3: eine schematisch Seitenansicht der Radschraube mit aufgesteckter Konusscheibe, wobei die mit a, b und c gekennzeichneten Darstellungen die seitliche Beweglichkeit der Konusscheibe in Bezug auf die Radschraube kennzeichnen,
- Fig. 4: eine Draufsicht der mit den Konusscheiben versehenen Radschrauben gemäß Fig. 3 zur weiteren Verdeutlichung der seitlichen Beweglichkeit der Konusscheibe,
- Fig. 5: eine teilweise längsgeschnittene Seitenansicht der Radmutter sowie eine Draufsicht dieser Mutter,
- Fig. 6: eine teilweise längsgeschnittene Seitenansicht der zur Radmutter von Fig. 5 gehörenden Konusscheibe sowie eine Draufsicht der Konusscheibe,
- Fig. 7: eine Seitenansicht der teilweise längsgeschnittenen Radmutter von Fig. 5 komplettiert mit der Konusscheibe von Fig. 6, die mit den mit a, b und c gekennzeichneten Darstellungen die seitliche Beweglichkeit der Konusscheibe in Bezug auf die Mutter verdeutlicht,
- Fig. 8: eine der Fig. 7 entsprechende Draufsieht der Badschraube zur weiteren Verdeutlichung der seitlichen Beweglichkeit,
- Fig. 9: eine teilweise längsgeschnittene Seitenansicht einer anderen Ausführungsform der Radmutter und einer Draufsicht der Mutter,
- Fig. 10: eine teilweise langsgeschnittene Seitenansicht der zu der Radmutter von Fig. 9 gehörenden Konusscheibe sowie einer Draufsicht der Konusscheibe,
- Fig. 11: eine teilweise längsgeschnittene Seitenansicht der Radmutter von Fig. 9, komplettiert mit der Konusscheibe von Fig. 10, zur Verdeutlichung der seitlichen Beweglichkeit der Konusscheibe in Bezug auf die Mutter gemaß den mit a, b und c gekennzeichneten Darstellungen,
- Fig. 12: eine Draufsicht der Radmutter von Fig. 11 zur weiteren Verdeutlichung der seitlichen Beweglichkeit der Konusscheibe,
- Fig. 13: eine Seitenansicht und Draufsicht einer herkömmlichen Radschraube mit dem mit ihr eine Einheit bildenden Konusteil,
- Fig. 14: eine teilweise geschnittene Seitenansicht einer herkömmlichen Radmutter mit dem mit ihr eine Einheit bildenden Konusteil, und
- Fig. 15: eine der Fig. 14 entsprechende Ansicht einer herkömmlichen Radmutter

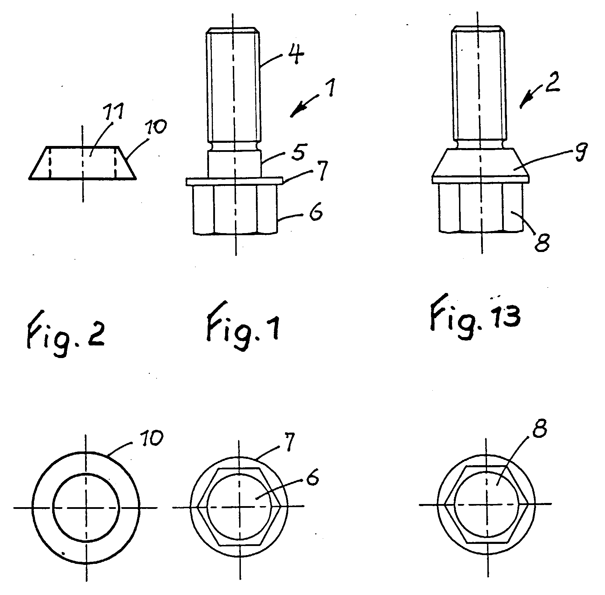

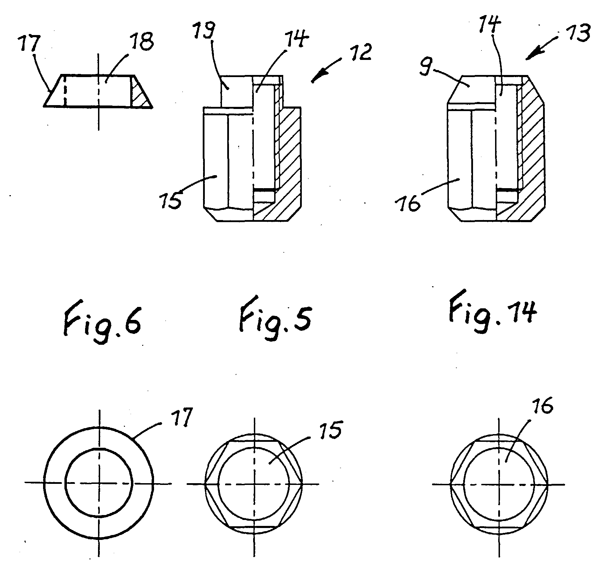

Die in Fig. 13 gezeigte herkömmliche Radschraube 2 weist einen Mutternteil 8, einen Gewindeschaftteil 4 und einen Konusteil 9 auf die miteinander eine Einheit bilden. Die Radschraube dient wie auch die in den Fig. 14 und 15 dargestellte herkömmliche Radmutter 13 bzw. 21, die ebenfalls einen mit dem Mutternteil 16 fest verbundenen Konusteil 9 aufweist, zur herkömmlichen Befestigung von Aluminium- oder Stahlrädern an Kraftfahrzeugen. Bei der in Fig. 1 gezeigten Radmutter 1 sind nur der übliche Mutternteil 6, versehen mit einem Endflansch 7, und der Gewindeschaltteil 4 vorhanden, während der Konusteil, wie aus Fig. 2 ersichtlich, als separate Konusscheibe 10 ausgebildet ist, die eine Spielbohrung 11 aufweist, mit der sie über den zylindrischen Teil 5 der Radmutter geschoben wird. Das Spiel dieser Spielbohrung beträgt ca. 2 cm, d. h. ihr Innendurchmesser ist um diesen Wert größer als die dazugehörige Radschraube bzw. Radmutter der in Fig. 5 gezeigten Art, auf die im folgenden noch eingegangen wird.

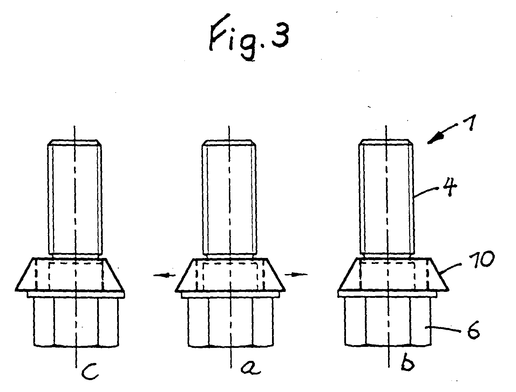

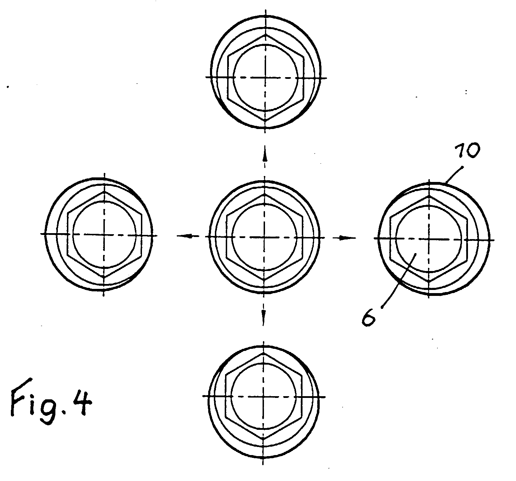

Auf diese Weise wird eine Multi-Use-Schraube geschaffen, die sich dadurch kennzeichnet, daß aufgrund des seitlichen Spiels der Konusscheibe, wie das in den Fig. 3 und 4 dargestellt und durch die Pfeile angedeutet ist, Räder mit gleichem Lochkreis an Radflanschen mit unterschiedlichen Lochkreisen befestigt werden können, wobei das Gesamtspiel ca. 2 mm beträgt, d. h., für den Fall, daß die Abweichung des Lochkreises vom Rad bzw. der Radfelge und Radnabe bzw. -scheibe nicht größer als 2 mm ist, kann durch die seitliche Beweglichkeit der Konusscheibe diese Abweichung ausgeglichen werden und eine Befestigung derartiger Räder an diesen Radnaben ohne weiteres erfolgen. Dies bedeutet beispielsweise, daß Fiat- und VW-Fahrzeuge, die normalerweise mit unterschiedlichen Lochkreisen am Fahrzeug ausgestattet sind, mit Hilfe dieser neuartigen Radschraube mit gleichen Rädern ausgestattet werden können, ohne daß Halterungs- bzw. Festigkeitsprobleme an den Fahrzeugen bzw. ihren Rädern auftreten.

So wie die in Fig. 1 gezeigte Radschraube kann, wie aus Fig. 5 hervorgeht, auch die Radmutter 12 mit einer in Fig. 6 gezeigten separaten Konusscheibe 17 versehen werden, deren Durchgangsbohrung 18 wiederum ein seitliches Bewegungsspiel ermöglicht, wenn die Konusscheibe aufdie schaftförmige Verlängerung 19 der Radmutter 12 aufgesteckt worden ist, die das Innengewinde 14 zylindrisch umgibt, welches sich wie üblich in den Mutternteil 15 fortsetzt.

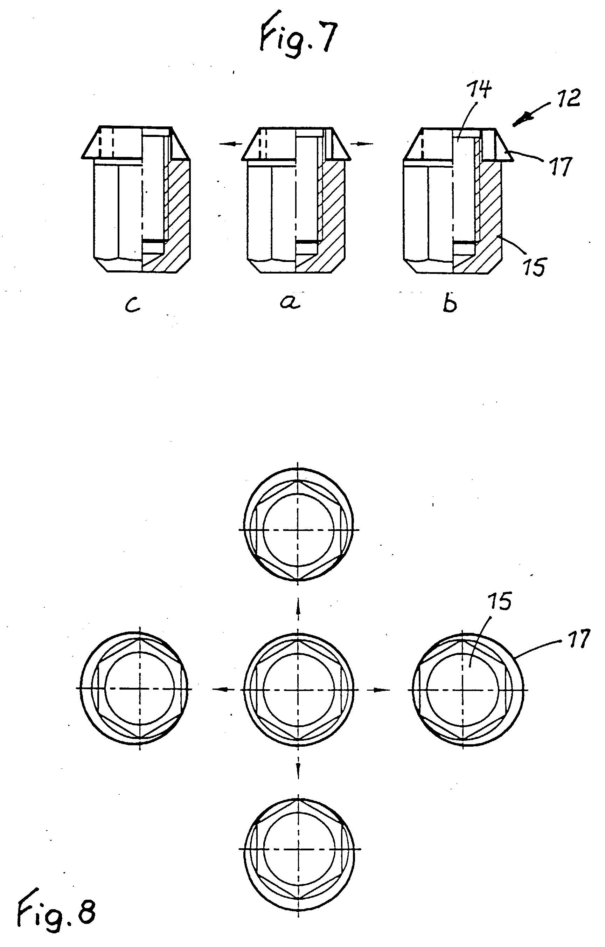

In Fig. 7 ist ähnlich wie in Fig. 3 mit den Darstellungen a, b und c das seitliche Bewegungsspiel der Radmutter 12 dargestellt, ebenso wie in Fig. 8.

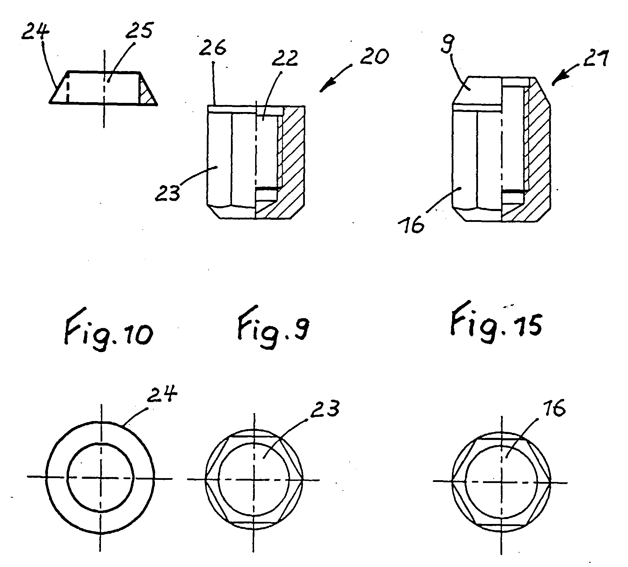

In den Fällen, in denen die Radnabe mit Gewindebolzen versehen ist, das Rad bzw. die Felge also mittels Radschrauben befestigt werden muß, kann ggf. an Stelle der Radmutter 12 auch eine Radmutter der in Fig. 9 mit 20 bezeichneten Art Verwendung finden, die keine schaftförmige Verlängerung aufweist, sondern an ihrem Boden mit einem glatten Flanschstück 26 abschließt, während der Mutternteil 23 sowie das Innengewinde 22 im wesentlichen den diesbezüglichen Teilen der in Fig. 5 gezeigten Radmutter 12 entsprechen.

Auch hier ist wieder die Konusscheibe 24, wie in Fig. 10 gezeigt, ein getrennt gefertigtes Teil, dessen Bohrung 25 bezüglich des Radbolzens, auf den die Konusscheibe aufgesetzt wird, eine Spielpassung hat, sich also um ca. 2 mm in Bezug auf die Bolzenlängsachse seitlich verschieben kann, um mit dem betreffenden Loch des Felgenlochkreises in zentrischen Eingriff zu treten.

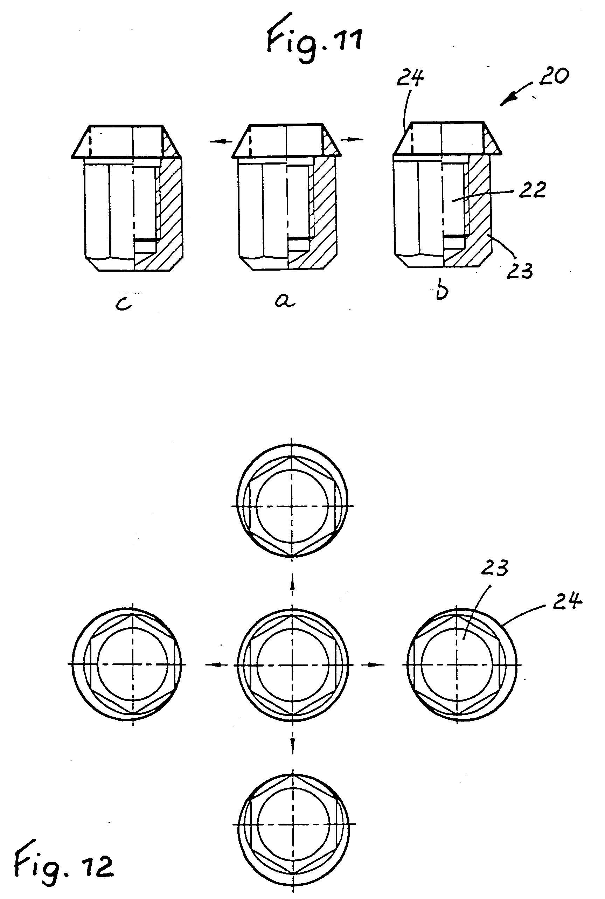

Die seitliche Beweglichkeit dieser Radmutter 20 ist wiederum in den Fig. 11 und 12 mit Pfeilen gekennzeichnet, die den Fig. 7 und 8 entsprechen.

## Patentansprüche

1. Radschraube (1) und Radmutter (12, 20) zur Befestigung von Kraftfahrzeugrädern, wobei die Radschraube (1) einen Mutternteil (6), einen Außengewindeschaftteil (4) und einen dazwischen befindlichen Konusteil aufweist und die Radfelge durchgreifend in eine Gewindebohrung der Radnabe oder -schelte einschraubbar ist, und die Radmutter (12, 20) ein Innengewinde (14, 22) sowie einen Konusteil aufweist und auf den Außengewindeschaftteil eines die Radfelge durchgreifenden Radbolzens der Radnabe oder -scheibe aufschraubbar ist, **dadurch gekennzeichnet, daß** der Konusteil eine separate Konusscheibe (10, 17, 24) ist, die auf die Radschraube (1) oder den Radbolzen bzw. die Radmutter (12) aufsteckbar ist und eine Durchgangsbohrung (11, 18, 25) aufweist, deren Durchmesser größer ist als der Außendurchmesser des Gewindeschaftteils (4) der Radschraube oder des Radbolzens bzw. des Schaftes der Radmutter (12).

2. Radschraube und Radmutter nach Anspruch 1, **dadurch gekennzeichnet, daß** der Durchmesser der Bohrung (11, 18, 25) der Konusscheibe (10, 17, 24)1,5 bis 2,5 mm größer ist als der Außendurchmesser der zugehörigen Radschraube bzw. des zugehörigen Radbolzens.

3. Radschraube und Radmutter nach den Ansprüchen 1 und 2, **dadurch gekennzeichnet daß** der größte Außendurchmesser der Konusscheibe (10, 17, 24) größer ist als der Außendurchmesser des Radmutternflansches (7, 26).

4. Badschraube und Radmutter nach einem der Ansprüche 1 bis 3, **dadurch gekennzeichnet, daß** die Radmutter (12) eine schaftförmige Verlängerung (19) aufweist, auf die die Konusscheibe (17) aufsteckbar ist.

5. Radschraube und Radmutter nach Anspruch 4, **dadurch gekennzeichnet, daß** der Außendurchmesser der schaftförmigen Verlängerung (19) 1,5 bis 2,5 mm kleiner ist als der Innendurchmesser der Konusscheibe (17).

6. Radschraube und Radmutter nach einem der Ansprüche 1 bis 5, **dadurch gekennzeichnet, daß** die Radschraube (1) und die Radmutter (12, 20) für Räder mit gleichen Lochkreisen an Radflanschen oder -scheiben bzw. Radnaben mit unterschiedlichen Lochkreisen verwendbar sind.
